# EUROPEAN PATENT APPLICATION

(11) **EP 1 293 754 A1**
(43) Date of publication of application: **19.03.2003**
(21) Application number: 02078813.9
(22) Date of filing: 16.09.2002
(51) Int. Cl.: G01B 11/16, F01D 21/00

(54) **Method and device for examining the strain of elongated bodies**

(30) Priority: 18.09.2001 NL 1018974
(71) Applicant: N.V. Kema, 6812 AR Arnhem (NL)
(72) Inventor: Hunik, Rudolf, 6861 ZP Oosterbeek (NL)
(74) Representative: Eveleens Maarse, Pieter

(57) **Abstract**

The invention relates to a device and a method for measuring the strain of elongated objects such as turbine blades, and in particular a device for measuring the strain in a strain direction of a body provided with a series of markings which can be optically monitored and extend with a directional component in the strain direction, comprising:
- an optical pick-up element;
- imaging means for imaging the markings on the optical pick-up element;
- fixation means for fixing the optical pick-up element and the imaging means perpendicularly of the strain direction;
- a processing element for processing the electrical signals coming from the pick-up element;
- a memory for storing the signals coming from the processing element; and
- a comparing element for comparing signals coming from the memory with signals coming from the processing element, and deriving from the comparison a signal representing the strain of the body.

It is possible with this device without the blades having to be taken out of the turbine.

## Description

The present invention relates to a method and to a device for measuring strain in elongate objects, for instance turbine blades.

Using measuring equipment operating in three dimensions it is possible to determine very precisely the dimensions of bodies, for instance of turbine blades. For example the strain or the deformation of such a turbine blade can hereby be determined. Determining the strain is important in order to establish the creep and fatigue of a turbine blade, and on the basis thereof the expected lifespan of such a blade. It is pointed out here that turbine blades are very expensive components, while failure of such a blade can result in very considerable damage. Precise determination of the lifespan of a blade in this manner has great economic advantages.

This is the case particularly, although not exclusively, for the first row of runner blades of a gas turbine. This is generally the row of blades which is most heavily loaded and the most expensive.

It is indeed possible with the prior art measuring devices operating in three dimensions to determine the precise dimensions of such a blade, so that on the basis thereof the remaining lifespan of the blade can be established as accurately as possible.

However, this known device and method require dismantling of such a blade from a turbine and reassembly thereof. This is a time-consuming and costly operation.

The object of the present invention is to provide such a device and method which obviate the above stated drawbacks.

This object is achieved by a device for measuring the strain in a strain direction of a body provided with a series of markings which can optically monitored and extend with a directional component in the strain direction, comprising:
- an optical pick-up element;
- imaging means for imaging the markings on the optical pick-up element;
- fixation means for fixing the optical pick-up element and the imaging means perpendicularly of the strain direction;
- a processing element for processing the electrical signals coming from the pick-up element;
- a memory for storing the signals coming from the processing element; and
- a comparing element for comparing signals coming from the memory with signals coming from the processing element, and deriving from the comparison a signal representing the strain of the body.

The objective is also achieved by a method for measuring the strain of bodies provided with a series of markings which can be optically monitored and extend in a measuring direction, comprising the following steps of:
- placing an optical pick-up element in the vicinity of the body for measuring;
- fixing the pick-up element transversely of the measuring direction;
- imaging the body on the pick-up element and generating from the depicted image a signal representing the position of the markings; and
- storing the signal;
- repeating the first three steps after a period of time; and
- comparing the stored signal with the signal coming from the pick-up element, and deriving a value for the strain by means of the comparison.

According to a first embodiment the device is dimensioned for measuring the strain of at least one blade of a gas turbine, and the device is suitable for placing with at least its optical pick-up element into the interior of a gas turbine through an opening created by removing a component from a gas turbine housing.

This provides the possibility of placing the optical pick-up element of the measuring device into the interior of the turbine housing without the turbine housing having to be taken apart.

According to a specific preferred embodiment hereof, the device is suitable for placing with at least its optical pick-up element into the interior of a gas turbine through the opening created by removing a burner from the gas turbine housing for the purpose of measuring the strain of at least one blade of the first row of runner blades.

Burners are devices which are relatively simple to remove and removal thereof creates a sufficiently large opening for placing the measuring device according to the invention into the interior of the gas turbine housing.

It should however be borne in mind here that only the first row of runner blades can be monitored from the thus accessible position.

According to a further embodiment the device is suitable for placing with at least its optical pick-up element into the interior of the gas turbine between the rows of guide blades and rows of runner blades through the opening created in the gas turbine housing by removing a cover from the turbine housing, for the purpose of measuring the strain of at least one blade of the first row of runner blades.

This device makes use of other covers present in the gas turbine housing. An example of such an opening closed by a cover during operation is the so-called boroscope opening. This is present in many gas turbine housings.

The first row of runner blades is of course the most heavily loaded. It may however be useful in specific situations to also be able to monitor subsequent arrays of runner blades.

As already stated, it is attractive if the optical pick-up and the processing device are adapted to process markings formed by cooling holes in the blade surface.

Effective use can hereby be made of these already present markings.

According to a further embodiment the optical pick-up element extends at least substantially in the strain direction and is suitable for fixing.

Use is herein made of a stationary pick-up element.

This stationary pick-up element can be applied via two specific embodiments, according to the first of which the optical pick-up element is flat and, in addition to extending in the strain direction, extends substantially perpendicularly of the turbine shaft and substantially perpendicularly of the strain direction.

This embodiment is intended for the purpose of picking up a turbine blade during standstill. This embodiment is therefore relatively simple.

According to a second embodiment hereof the optical pick-up element is elongate and is suitable for successively picking up the image of the rotating runner blades and transferring said image to the processing element, and the processing element is suitable for deriving the position of the markings on the rotating blades from the signals coming from the pick-up element.

This second embodiment is suitable for imaging rotating runner blades. It therefore extends in only one direction, wherein the images in the other direction are obtained by rotating the runner blades.

It is noted here that so-called torning devices are usually present in such gas turbines to cause slow rotation of the turbine during cooling. Cooling during standstill can result in symmetry aberrations in such highly loaded machines, and thereby in non-roundness.

It is however possible to make use of a movable optical pick-up element. This is set forth in a subsequent embodiment, according to which the optical pick-up element and the imaging means are integrated in a pick-up head movable along a linear path extending in the strain direction and placed on a linear drive element, and wherein the device comprises a control element for controlling the linear displacing element.

Two different situations can here also be envisaged; according to the first of these the pick-up head comprises a linear optical pick-up, the longitudinal direction of which extends substantially transversely of the turbine shaft and substantially transversely of the longitudinal direction.

This embodiment is also intended for picking up a stationary turbine blade. Use can also be made in this situation of a rotating turbine. According to a further embodiment the pick-up head is provided for this purpose with an optical pick-up with at least one pick-up cell, and the pick-up head is suitable for successively picking up the image of rotating runner blades and transferring said image to the processing element, and the control element is adapted to control the linear displacing element, and the processing element is suitable for deriving the position of the markings on the rotating blades from the signals coming from the pick-up element.

It is possible to suffice for this purpose with only a single pick-up cell or a minimal number of pick-up cells.

So as to take account of displacements of the blade relative to the pick-up device caused for instance by vibrations of the rotor, the optical pick-up can be provided with at least a second pick-up cell, and both pick-up cells are placed at a distance in the strain direction, this distance being at least as large as the pitch of the cooling holes.

It is possible in this embodiment to allow for a displacement of the pick-up device during different recordings. Such displacements are after all caused by vibrations of the rotor shaft as it turns. It is pointed out here that a comparison must in any case be made between two different measurements which have taken place some considerable time after each other.

Other attractive preferred embodiments are stated in the remaining sub-claims.

The invention will be elucidated hereinbelow with reference to the annexed drawings, in which:
figure 1 shows a detail view of the construction of a first embodiment of the invention;
figure 2 is a partly broken-away view of a gas turbine in which the embodiment shown in figure 1 is applied;
figure 3 shows a schematic perspective view of a second embodiment of the invention;
figure 4 shows a schematic perspective view of the first embodiment of the invention;
figure 5 is a schematic perspective view of a third embodiment of the invention; and
figure 6 is a schematic perspective view of a fourth embodiment of the invention.

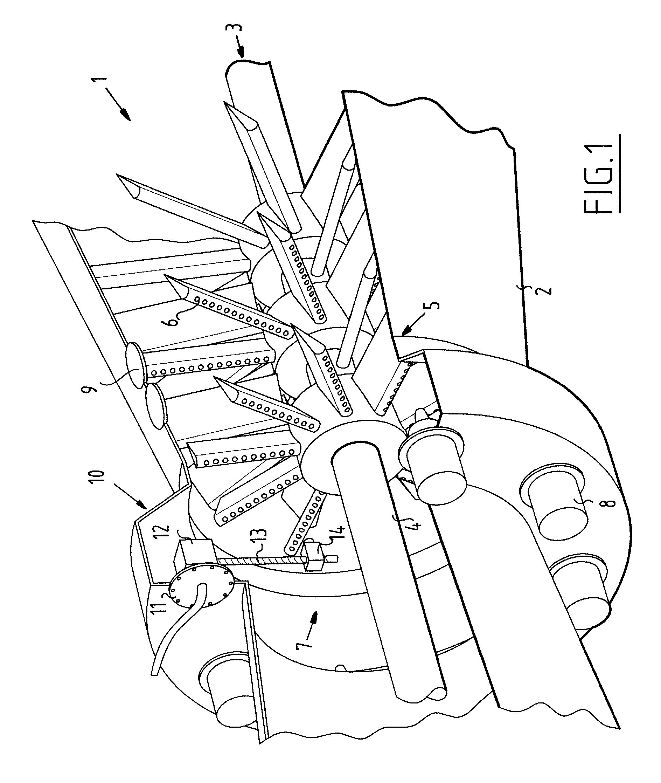

Shown schematically in figure 1 is a gas turbine 1 formed by a gas turbine housing 2 in which a rotor 3 is arranged rotatably. Rotor 3 comprises a shaft 4 and a number of rows of blades 5 arranged on shaft 3. Each row of blades 5 comprises a number of blades 6.

The rotor housing comprises a combustion chamber 7, in the wall of which are placed burners 8. Burners 8 are removable.

A number of inspection or boroscope hatches 9 are arranged in the part of gas turbine housing 2 in which blade rows 5 are arranged.

Blades 6 are heavily loaded thermally, mechanically and chemically. This is the case particularly, although not exclusively, for the first blade row 5. This is after all situated closest to burners 8, so that the temperatures and pressures prevailing in the vicinity of this blade row are the highest.

As already stated in the preamble, the invention relates to a method and a device for measuring the strain of the blades. Such a device is shown in figure 1. It comprises a monitoring element 10 which is placed in the shown embodiment opposite the first blade row 5. A burner 8 is removed for this purpose, whereafter monitoring element 10 is placed in the thus created opening. The monitoring element 10 shown in figure 1 comprises a fixation plate 11 mounted on the gas turbine housing, a drive mechanism 12 mounted on fixation plate 11, a spindle 13 driven by drive mechanism 12 and an optical pick-up 14 placed on the spindle.

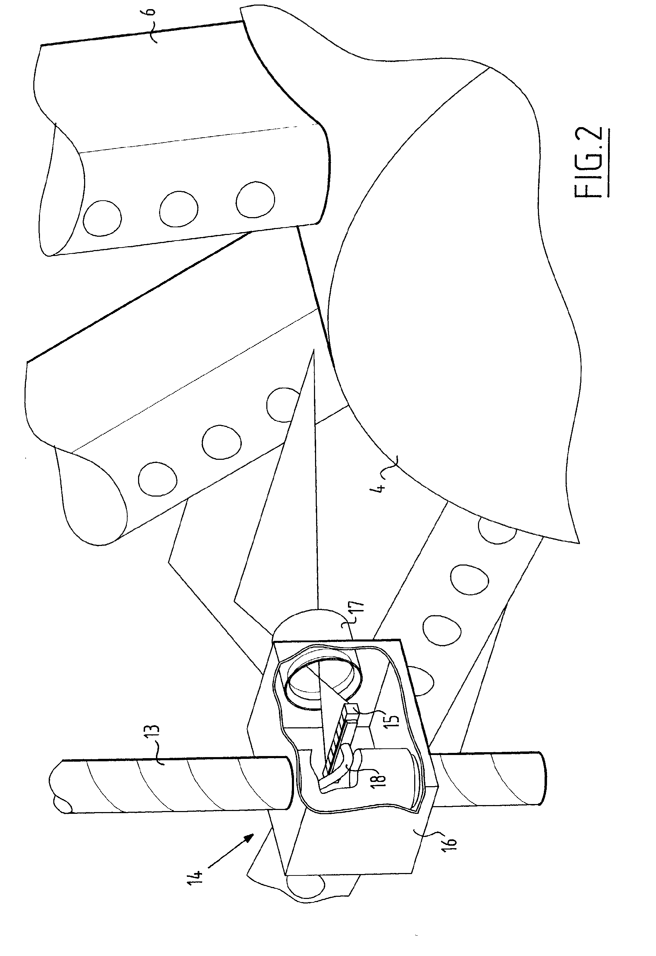

The said construction is shown in more detail in figure 2. This figure shows that optical pick-up 14 comprises a pick-up element 15 formed in the present embodiment by a linear array of optical pick-up cells. The optical pick-up further comprises a housing 16 in which pick-up element 15 is placed and a lens 17 arranged in the housing. Lens 17 is adapted to image a part of a blade 5 on pick-up element 15.

Pick-up element 15 is connected with a cable 18 to a processing unit, not shown in the drawing, which is adapted to process the signals coming from the pick-up element. Such a processing unit is formed by a computer, for instance in the form of a PC provided with relevant software. This must of course be provided with an input converter for converting the input signals into a form usable by the computer.

In the present embodiment the part of blade 6 imaged on pick-up element 15 is linear in transverse direction of blade 6. This is related to the fact that pick-up element 15 is displaceable in longitudinal direction of blade 6. It is pointed out here that this embodiment is suitable for picking up a stationary blade 6.

The drive device for driving pick-up 15 in longitudinal direction of spindle 13 comprises a nut placed in the drive unit and drivable in rotation and a guide for preventing co-rotation of spindle 13.

The operation of this device is as follows.

In order to be able to carry out a length measurement in this embodiment the rotor 4 must be stationary. Monitoring element 10 of the device is then mounted in gas turbine 1 and connected to the computer. Under the control of the computer the pick-up 4 is caused to travel the whole path along the length of spindle 13, wherein a linear image of blade 6 is imaged on the linear pick-up element 15, and pick-up element 15 converts the linear image into an electrical signal. This signal is carried to the computer and there stored in the memory after possible conversion.

The image thus stored in the memory is an image of blade 6.

By comparing the thus stored image of blade 6 with images of the same blade obtained later, the strain which has occurred in the intervening period can be determined. The creep, which is a measure of the quality and the remaining lifespan of the blade, can be determined on the basis of the strain.

A large number of turbines is provided with blades in which cooling holes 19 are arranged. These cooling holes 19 can serve as reference points in the image. Firstly, the electronic processing of the data is greatly facilitated hereby and, secondly, the location of the strain can be determined more accurately. It is therefore attractive to image that side of turbine blades 6 where cooling holes 19 are visible.

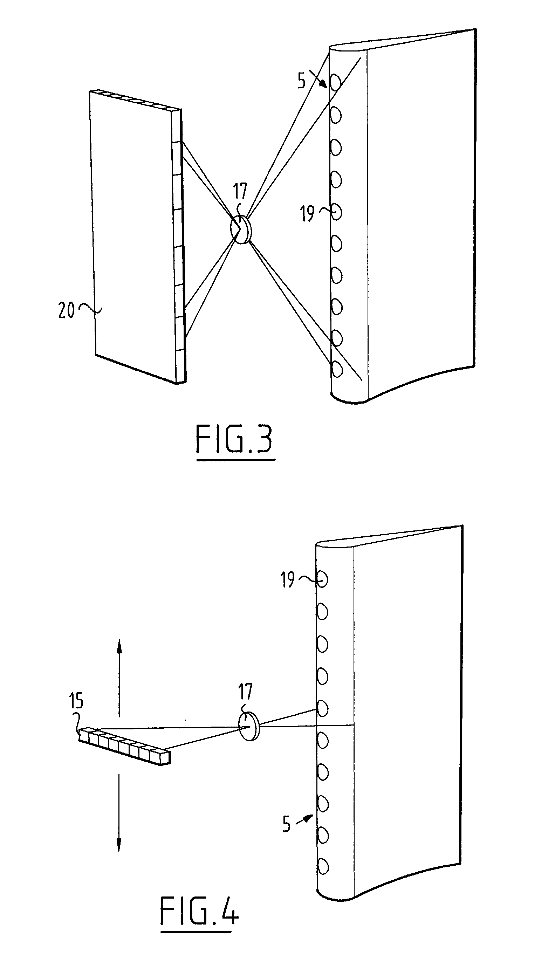

The configuration of the device shown in figures 1 and 2 is shown schematically in figure 4. This is a configuration wherein blade 6 must be stationary when the recording is made, and wherein pick-up element 15 moves. It is however also possible to make use of a configuration wherein pick-up element 15 is also stationary.

Such a configuration is shown in figure 3. Use is made herein of a stationary pick-up element 20. This pick-up element 20 has considerable dimensions because the whole blade 6, or at least the part thereof for imaging, must be imaged in its entirety on pick-up element 20. Figure 3 shows such a configuration; here the pick-up element 20 is as long as blade 6. It is of course possible to make use of a shorter pick-up element if a reducing lens 17 is used. A minimal resolution must of course be achievable to enable determination of the strain with sufficient resolution and accuracy.

In the above described embodiments the blades 6 for examining are stationary. As a consequence an optical pick-up of a certain width is necessary. In many cases it is not possible to apply pick-ups of such a minimal width because such pick-ups cannot be moved through the opening in the turbine housing.

The invention provides for such situations two embodiments wherein it is possible to image blades 6 during rotation. It is hereby possible to apply a narrower pick-up.

A further advantage of having the shaft rotate during the recordings is avoidance of errors in the measurement result as a consequence of sagging of the hot shaft.

It is not possible herein to examine gas turbine 1 during operation, although this is possible during so-called torning, wherein the rotor is rotated at a low rotation speed. This prevents sagging of the shaft.

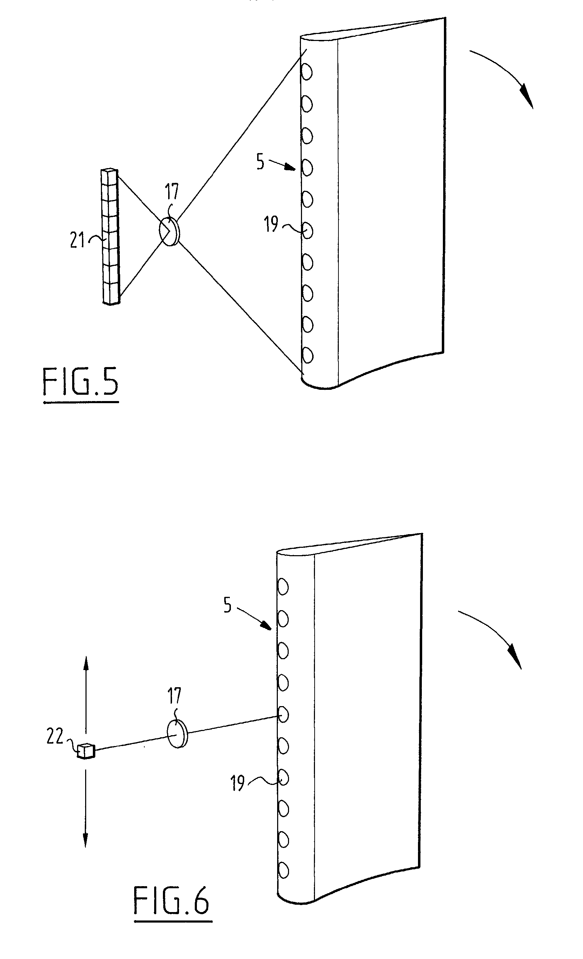

Figure 5 shows an embodiment which is suitable for picking up blades 6 during rotation thereof. Use is made herein of a stationary pick-up 22, the length of which is such that using a lens 17 the whole relevant part of a blade 6 can be imaged thereon. The width of pick-up 22 is minimal, i.e. preferably only one picture element wide, in order to prevent "smearing" of the images during rotation of the shaft. During rotation of the rotor the images of a certain frequency projected onto pick-up element 22 are read and fed to the computer. The frequency is herein chosen - subject to the rotation speed of the rotor - so as to obtain a sufficient resolution.

A further advantage of this embodiment is the fact that it is possible during rotation to record all blades 6 of blade row 5; it is therefore no longer necessary here to make an image separately for each blade 6.

Figure 6 shows an embodiment wherein pick-up element 23 only comprises a single pixel. This embodiment, as the previous one, is suitable for monitoring rotating blades 6. During recording this pick-up element 23 executes a movement perpendicularly of the longitudinal direction of the monitored blade 6. This means that the data flow is presented in purely serial form to the computer. The frequency of the passage of blades 6 will herein be greater than the frequency of the up and downward movement of pick-up element 23.

During rotation of the rotor vibrations will occur which will influence the measurement result in this latter embodiment. This is related to the fact that at any moment in time only a single recording is made for which no reference signal is present.

It is therefore recommended in this latter embodiment to apply a second identical pick-up element 23 which is placed a fixed distance under the first pick-up element 23 and which is movable simultaneously with the first pick-up element 23 in vertical direction. Owing to this second element 23 there is obtained for each measurement a reference with which the effect of vibrations can be compensated in the processing of the measurement signals.

The above discussed embodiments can be applied in combustion chamber 7 as described with reference to figures 1 and 2.

It is however also possible to apply implementations of all embodiments between the rows 5 of blades. Access will herein have to be obtained through a so-called boroscope hole 9 to the space between blade rows 5. It is herein possible to record both blade rows 5 between which the device according to the invention is placed. However, the row will preferably be recorded which has cooling holes 19 directed toward pick-up 14.

## Claims

1. Device for measuring the strain in a strain direction of a body provided with a series of markings which can be optically monitored and extend with a directional component in the strain direction, comprising:
- an optical pick-up element;
- imaging means for imaging the markings on the optical pick-up element;
- fixation means for fixing the optical pick-up element and the imaging means perpendicularly of the strain direction;
- a processing element for processing the electrical signals coming from the pick-up element;
- a memory for storing the signals coming from the processing element; and
- a comparing element for comparing signals coming from the memory with signals coming from the processing element, and deriving from the comparison a signal representing the strain of the body.

2. Device as claimed in claim 1, **characterized in that** the device is dimensioned for measuring the strain of at least one blade of a gas turbine, and that the device is suitable for placing with at least its optical pick-up element into the interior of a gas turbine through an opening created by removing a component from a gas turbine housing.

3. Device as claimed in claim 2, **characterized in that** the device is suitable for placing with at least its optical pick-up element into the interior of a gas turbine through the opening in the turbine housing created by removing a burner from the gas turbine housing for the purpose of measuring with its optical pick-up element the strain of at least one blade of the first row of runner blades.

4. Device as claimed in claim 2, **characterized in that** the device is suitable for placing with at least its optical pick-up element into the interior of a gas turbine between 5rows of guide blades and rows of runner blades through the opening in the turbine housing created by removing a cover from the gas turbine housing, for the purpose of measuring the strain of at least one blade of the first row of runner blades.

5. Device as claimed in any of the claims 1-4, **characterized in that** the optical pick-up and the processing device are adapted to process markings formed by cooling holes in the blade surface.

6. Device as claimed in claims 1-5, **characterized in that** the optical pick-up element extends substantially in the strain direction and that the pick-up element is suitable for fixing.

7. Device as claimed in claim 6, **characterized in that** the optical pick-up element is flat and in addition to extending in the strain direction extends substantially perpendicularly of the turbine shaft and substantially perpendicularly of the strain direction.

8. Device as claimed in claim 6, **characterized in that** the optical pick-up element is elongate and is suitable for successively picking up the image of rotating runner blades and transferring said image to the processing element, and that the processing element is suitable for deriving the position of the markings on the rotating blades from the signals coming from the pick-up element.

9. Device as claimed in claims 1-5, **characterized in that** the optical pick-up element and the imaging means are integrated in a pick-up head movable along a linear path extending in the strain direction and placed on a linear displacing element, and that the device comprises a control element for controlling the linear displacing element.

10. Device as claimed in claim 9, **characterized in that** the pick-up head comprises a linear optical pick-up, the 5longitudinal direction of which extends substantially transversely of the turbine shaft and substantially transversely of the strain direction.

11. Device as claimed in claim 9, **characterized in that** the pick-up head comprises an optical pick-up with at least one pick-up cell which is suitable for successively picking up the image of rotating runner blades and transferring said image to the processing element, that the control element is adapted to control the linear displacing element, and that the processing element is suitable to derive the position of the markings on the rotating blades from the signals coming from the pick-up element.

12. Device as claimed in claim 11, **characterized in that** the optical pick-up is provided with at least a second pick-up cell, and that the pick-up cells are placed at a distance in the strain direction, this distance being at least as large as the pitch of the cooling holes.

13. Device as claimed in any of the foregoing claims, **characterized in that** the processing element is adapted to correct errors caused by misalignment of the linear displacing element in the plane extending transversely of the turbine shaft by correlation with the lateral displacements of the image of the markings transversely of the strain direction.

14. Device as claimed in any of the foregoing claims, **characterized in that** the processing element is adapted to correct errors caused by misalignment of the linear displacing element in the plane transversely of the strain direction by correlation of the dimensions of the marking perpendicularly of the strain direction.

15. Method for measuring the strain of bodies provided with a series of markings which can be optically monitored and extend in a measuring direction, comprising the following steps of:
- placing an optical pick-up element in the vicinity of the body for measuring;
- fixing the pick-up element transversely of the measuring direction;
- imaging the body on the pick-up element and deriving from the depicted image a signal representing the position of the markings; and
- storing the signal;
- repeating the first three steps after a period of time; and
- comparing the stored signal with the signal coming from the pick-up element, and deriving a value for the strain by means of the comparison.

16. Method as claimed in claim 15, **characterized in that** the method is applied for measuring the strain of the blades of a gas turbine.

17. Method as claimed in claim 16, **characterized in that** during imaging on the pick-up element of the markings arranged on a runner blade, the blade wheel on which the runner blades are mounted is rotated.

18. Method as claimed in claim 15 or 16, **characterized in that** during imaging of the markings arranged on a blade, the pick-up element is moved in the direction parallel to the measuring direction.
